(19) 

**Europäisches Patentamt**
**European Patent Office**
**Office européen des brevets**

(11) **EP 3 901 583 B1**

(12) **EUROPEAN PATENT SPECIFICATION**

(45) Date of publication and mention
of the grant of the patent:
**27.08.2025 Bulletin 2025/35**

(21) Application number: **21169726.3**

(22) Date of filing: **21.04.2021**

(51) International Patent Classification (IPC):
**G01D 5/20** (2006.01)     **G01P 3/00** (2006.01)

(52) Cooperative Patent Classification (CPC):
**G01D 5/2073**; G01P 3/488

(54) **RESOLVER INTERFACE SYSTEMS AND METHODS**

RESOLVER-SCHNITTSTELLENSYSTEME UND -VERFAHREN

SYSTÈMES ET PROCÉDÉS D'INTERFACE DE RÉSOLVEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.04.2020 IN 202041017087**

(43) Date of publication of application:
**27.10.2021 Bulletin 2021/43**

(73) Proprietor: **Hamilton Sundstrand Corporation
Charlotte, NC 28217 (US)**

(72) Inventors:
• **MOHAN RAO, Sesh**
**Bangalore, Karnataka 56011 (IN)**
• **RAGHAVAN, Ambili**
**Bangalore, Karnataka 560094 (IN)**

(74) Representative: **Dehns**
**10 Old Bailey**
**London EC4M 7NG (GB)**

(56) References cited:
**EP-A1- 1 052 770      JP-A- H0 876 856
JP-A- S6 038 659       US-A- 4 481 468
US-A1- 2009 167 296**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### BACKGROUND

#### 1. Field

The present disclosure relates to motor drive systems, and more particularly to resolver sensors used to determine the rotor angle and, thereby, the speed of the motor.

#### 2. Description of Related Art

In a typical software implementation to monitor the angular position of the rotor, one step is to read the sine and cosine feedback signals of stator windings of a resolver. In traditional systems, an interface to the resolver includes a primary sine excitation signal to the rotor winding which is fed by the controller card (micro-controller or field programmable gate array (FPGA) and signal conditioning circuitry) and the feedback from the stator winding is processed by the controller card (signal conditioning circuitry and external ADC or ADC of the micro-controller). The sine and cosine feedback from the stator windings is processed through filtering and signal conditioning and is read by the ADC. These feedback signals are used in conjunction with a resolver excitation signal to determine the angle and the angular quadrant. The tan inverse or arc tan function is generally used to determine the angle and based on the sign, the quadrant is determined.

The number of instruction cycles consumed in the arc tan function computation which includes quadrant determination, typically exceeds 100 instruction cycles and overall consumes around 40% of the cycles for resolver function implementation. Other techniques may also be used to generate sinusoidal waveforms for driving the resolver primary. US 4 481468 A shows a known resolver interface system.

The conventional techniques have been considered satisfactory for their intended purpose. However, there is an ever present need for improved systems and methods which can be used to compute the shaft angle. This disclosure provides a solution for this need.

### SUMMARY

A resolver interface system for a motor drive system is provided as defined by claim 1. The processing system can be at least one of a micro-controller or a field-programmable gate array. The system can include a resolver having a first excitation input, a second excitation input and a rotation signal output. A SIN wave generator can be operatively connected to the first excitation input to provide a SIN excitation signal thereto. A COS wave generator can be operatively connected to the second excitation input to provide a COS excitation signal thereto. A rotor winding can be operatively connected to the rotation signal output to output the rotation signal. A first stator winding can be operatively connected to the first excitation input to receive a first excitation signal. A second stator winding can be operatively connected to the second excitation input to receive a second excitation signal.

In accordance with another aspect, a method of determining a shaft angle of a rotor is provided as defined by claim 6.

These and other features of the embodiments of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:

Fig. 1 is a schematic diagram of an embodiment of a resolver constructed in accordance with the present disclosure, showing the windings of the resolver as positioned relative to the rotor shaft;
Fig. 2 is a schematic diagram of an embodiment of a resolver interface system constructed in accordance with the present disclosure, showing the phase detectors operatively connected to the output of the rotor winding;
Fig. 3 is a schematic diagram of another embodiment of a resolver interface system in accordance with this disclosure, showing the phase detectors operatively connected to the output of the rotor winding;
Figs. 4A-4B is a schematic diagram of voltage inputs applied to an embodiment of a Gilbert Multiplier cell constructed in accordance with the present disclosure;
Fig. 4C is a schematic diagram of a voltage output from an embodiment of a Gilbert Multiplier cell constructed in accordance with the present disclosure; and
Fig. 4D is a schematic depiction of a Gilbert Multiplier cell constructed in accordance with the present disclosure.

### DETAILED DESCRIPTION

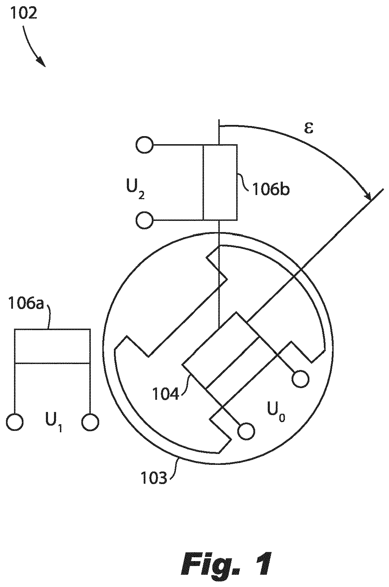

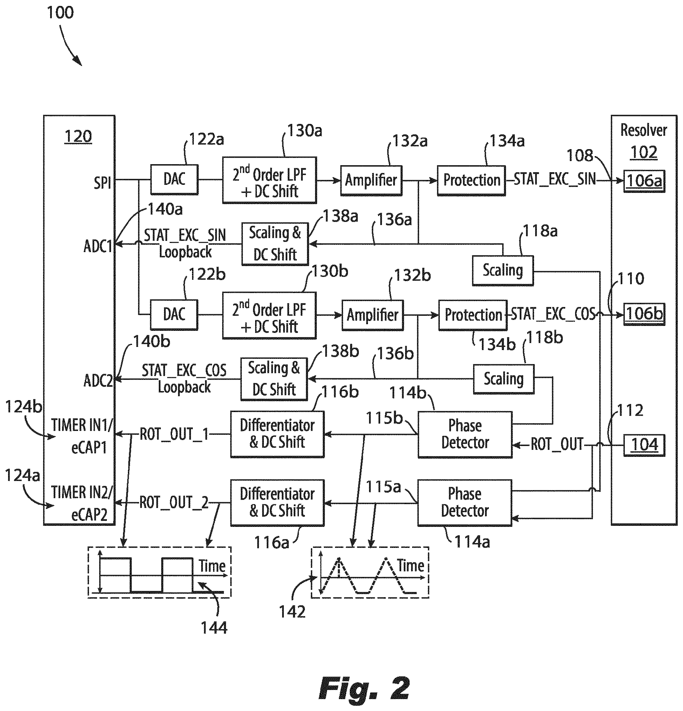

Reference will now be made to the drawings wherein like reference numerals identify similar structural features or aspects of the subject disclosure. For purposes of explanation and illustration, and not limitation, an illustrative view of an embodiment of a resolver interface system in accordance with the disclosure is shown in Fig. 2 and is designated generally by reference character 100. Other embodiments and/or aspects of this disclosure are shown in Figs. 1 and 3-4D. Certain embodiments described herein can be used to provide a resolver interface system that eases the computation in software, thereby reducing the overhead on the CPU (computer processing unit).

As shown in Fig. 1, a resolver 102 is an absolute angle sensor that uses passive transformer technology. The resolver 102 is a rotary transformer where the magnitude of the energy through the resolver rotor 104 and stator windings 106a and 106b varies sinusoidally as a rotor shaft 103 rotates. The resolver 102 has one rotor winding ($U_0$) 104, and two stator windings 106a and 106b, e.g. the SIN and COS Windings ($U_1$, $U_2$). The rotor winding 104 is located in the rotor of the resolver, the SIN and COS (e.g. stator) windings 106a and 106b in the stator. The stator windings 106a and 106b are mechanically displaced 90 degrees from each other.

With reference now to Fig. 2, a resolver interface system 100, e.g. for use in a motor drive, uses a phase-analog technique where the two stator windings 106a and 106b of a resolver 102 are excited by a SIN excitation signal and a COS excitation signal (STAT_EXC_SIN and STAT_EXC_COS), respectively, that are in phase quadrature to each other. This induces a voltage in the rotor (rotor) winding 104 with an amplitude and frequency that are fixed and a time phase that varies with shaft angle. This is the opposite of how a traditional resolver interface system normally works (with excitation provided to the rotor and feedback from the stators). STAT_EXC_SIN and STAT_EXC_COS are generated using respective SIN and COS wave generators 122a and 122b, each which includes a digital-to-analog converter (DAC) and the associated signal conditioning circuitry.

With continued reference to Fig. 2, the resolver 102 has a first excitation input 108, a second excitation input 110 and a rotation signal output 112. The DAC is interfaced to a processing unit, e.g. a micro-controller 120, through a serial peripheral interface (SPI). Between each wave generator 122a and 122b and their respective inputs 108 and 110, respective second order low-pass filters 130a and 130b, respective op-amp based amplifier circuits 132a and 132b and respective protection devices 134a and 134b are used. Second order low-pass filters 130a and 130b filter noise from their respective excitation signal, STAT_EXC_SIN or STAT_EXC_COS. Op-amp based amplifier circuits 132a and 132b amplifies their respective excitation signal, STAT_EXC_SIN or STAT_EXC_COS, to meet the voltage and drive strength requirement of the sensor primary. Each line into signal inputs 108 and 110 includes a respective feedback loop 136a and 136b branching therefrom and going back to respective analog to digital converter (ADC) inputs 140a and 140b. The respective feedback signals, STAT_EXC_SIN_Loopback and STAT_EXC_COS_Loopback are run through respective scaling circuits with DC shift 138a and 138b. As described in more detail below, the induced signal output (ROT_OUT) from the rotor winding 104 is converted to produce a digital signal by measuring the change in its phase shift with respect to the reference signal.

With continued reference to Fig. 2, the SIN wave generator 122a is operatively connected to the first excitation input to provide the SIN excitation signal (STAT_EXC_SIN) thereto. The SIN wave generator 122a is operatively connected to a first phase detector 114a to provide a SIN reference signal thereto. The first stator winding 106a is operatively connected to the first excitation input 108 to receive the SIN excitation signal (STAT_EXC_SIN). A first scaling network 118a is positioned between the SIN wave generator 122a and the first phase detector 114a.

As shown in Fig. 2, a COS wave generator 114b is operatively connected to the second excitation input 110 to provide the COS excitation signal (STAT_EXC_COS) thereto. The COS wave generator 122b is operatively connected to a second phase detector 114b to provide a COS reference signal thereto. The second stator winding 106b is operatively connected to the second excitation input 110 to receive the COS excitation signal (STAT_EXC_COS). A second scaling network 118b is positioned between the COS wave generator 122b and the second phase detector 114b. The rotor winding 104 is operatively connected to the rotation signal output 112 to output the rotation signal (ROT_OUT). Phase detectors 114a and 114b are each operatively connected to the rotation signal output 112 to receive the rotation signal (ROT_OUT) therefrom and generate a phase difference signal. A micro-controller 120 operatively connected to the phase detectors 114a and 114b to determine a shaft angle of a rotor shaft, e.g. rotor shaft 103.

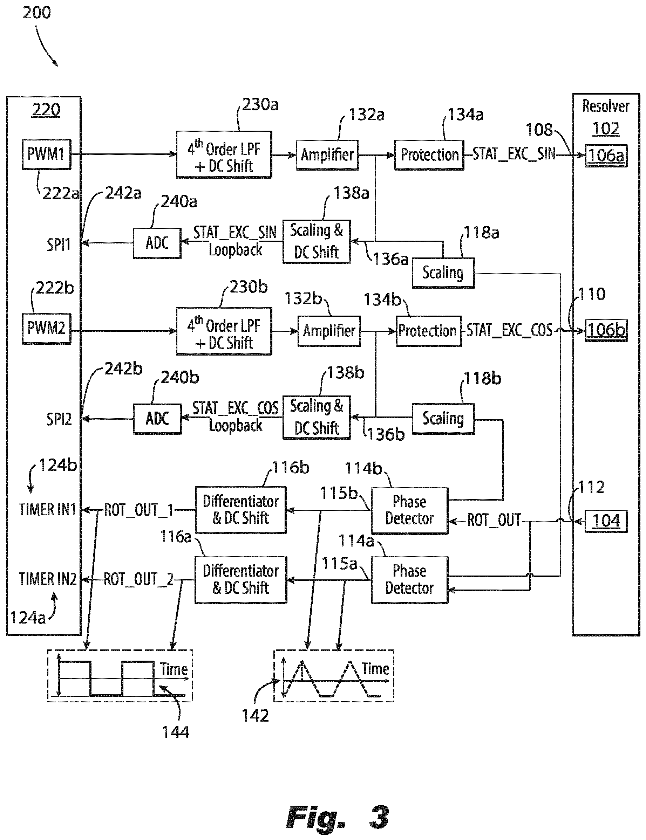

With continued reference to Fig. 2, the ROT_OUT signal from rotation signal output 112 is compared with either of the reference signals (i.e. either STAT_EXC_SIN or STAT_EXC_COS as they are in quadrature with each other) This is done by passing the signals STAT_EXC_SIN and STAT_EXC_COS through respective scaling networks 118a and 118b to match the amplitudes and then providing the input to respective phase detectors 114a and 114b. Each phase detector 114a and 114b produces triangular pulses 142 (schematically shown by the graph in Fig. 3 depicting voltage over time) which represent the zero crossing of the signals and indicates the phase difference between ROT_OUT and STAT_EXC_SIN or STAT_EXC_COS and represents the shaft angle.

As shown in Fig. 2, each phase detector 114a and 114b is operatively connected to a respective differentiator 116a and 116b. Each differentiator also includes a DC level-shift component. The respective outputs 115a and 115b of each phase detector 114a and 114b are fed to their respective differentiator 116a and 116b to convert each phase difference signal into respective pulse outputs (ROT_OUT_1 and ROT_OUT_2) to be fed to a timer/pulse capture input of a micro-controller 120, while keeping the zero crossing points the same. Each triangular wave 142 (e.g. the phase difference signal) is transformed to a square wave (e.g. a pulse) 144 (schematically shown by the graph in Fig. 3 depicting voltage over time) in line with the rising and falling levels of the input waveform by respective differentiators 116a and 116b. The pulse width/duty cycle represents the shaft angle, which is then measured in the micro-controller 120. The pulses are captured by timer units 124a and 124b of a micro-controller or FPGA I/O pins 224a and 224b (described below) for processing the angle.

With continued reference to Fig. 2, system 100 provides phase detectors 114a and 114b along with respective differentiator circuits 116a and 116b that produce pulses which correspond to the phase shift with respect to the reference signal. Because timer units 124a and 124b in microcontrollers have a dedicated engine, which works independent of the CPU, overhead on the CPU can be reduced as compared with traditional interface systems. Specifically, overhead on software for angle computation in resolver applications is reduced. By using a high end timer function in the resolver interface system 100, it can work independent of the CPU, thus conserving precious CPU time for a micro-controller. Additionally, the use of dual phase detectors 114a and 114b allow for redundancy.

With reference now to Fig. 3, a resolver interface system 200 for a field-programmable gate array (FPGA) based resolver interface is shown. System 200 is the same as system 100 except that instead of a micro-controller 120 as the processing system, a FPGA 220 is used. For common aspects between systems 100 and 200, the same numerals are used for ease of reference. The description above relative to those same numerals of Fig. 2 readily applies to those items identified in Fig. 3. In system 200, sine modulated pulse-width modulations (PWM) are generated by respective PWM I/O 222a and 222b and 4th order low pass filters 230a and 230b are used to generate the respective excitation signals (STAT_EXC_SIN or STAT_EXC_COS).

System 200 includes an analog digital converter (ADC) interfaced to the FPGA through a serial peripheral interface (SPI). Respective op-amp based amplifier circuits 132a and 132b and respective protection devices 134a and 134b are the same as those in Fig. 2. Respective feedback loops 136a and 136b are the same as Fig. 2, except that they pass through respective ADCs 240a and 240b exterior to the FPGA. After passing through respective ADCs 240a and 240b, they return back into respective SPIs 242a and 242b of the FPGA 220. Respective scaling circuits with DC shift 138a and 138b are the same as those of Fig. 2. The phase detectors 114a and 114b and differentiator with phase shift blocks 116a and 116b remain the same and the pulse output 144 can be read by the FPGA 220 in a manner similar to micro-controller 120 to determine the shaft angle, which is described in more detail below. The interface system 200 is well suited for FPGA based resolver interface systems, as I/O signal generation and capture can be done easily.

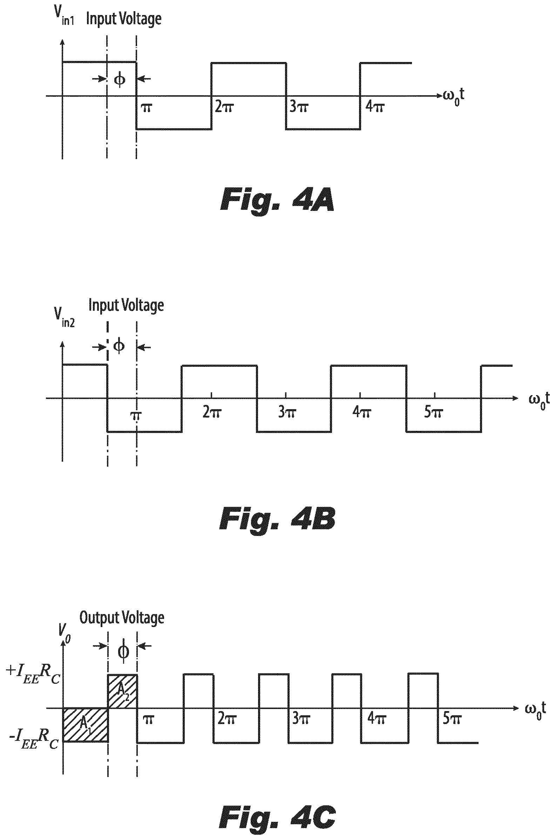

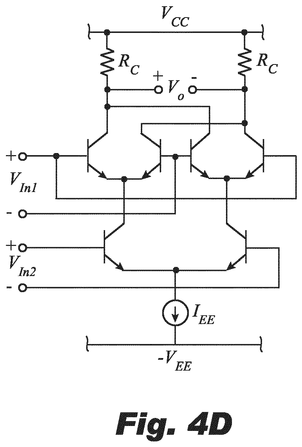

As shown in Figs. 4A-4D, each phase detector 114a and 114b can use a Gilbert Multiplier cell (Fig. 4D) where, when unmodulated signals of identical frequency are applied to its two inputs, the circuit behaves as a phase detector and produces an output whose DC component (average voltage, $V_{average}$) is proportional to the phase difference between the two inputs. For example, consider two input waveforms (square wave inputs Vin1, Vin2), shown in Figs. 4A-4B, which are applied to a Gilbert multiplier. By assuming that both inputs are large in magnitude, all the transistors in the circuit will behave as switches. The inputs applied to the Gilbert multiplier in the context of this disclosure are large magnitude sine wave inputs and the working principle of the Gilbert multiplier remains the same. The output waveform that results, shown in Fig. 4C, consists of a DC component and a component at twice the incoming frequency. The DC component represents the average voltage ($V_{average}$), where $V_O$ is the DC component in the phase detector output, where $t$ is time, $I_{EE}$ represents the emitter current, $R_C$ is the collector resistance in the Gilbert Cell circuitry in Fig. 4D, where $\Phi$ represents the phase, where $\omega_0$ is the angular frequency and where $d(\omega_0 t)$ represents a differential element.

$$V_{average} = \frac{1}{2\pi} \int_0^{2\pi} V_O(t)\, d(\omega_0 t)$$

$$= \frac{-1}{\pi}(A_1 - A_2)$$

$$V_{average} = \left[ I_{EE} R_C \frac{(\pi - \phi)}{\pi} - \frac{I_{EE} R_C \phi}{\pi} \right]$$

$$= I_{EE} R_C \left( \frac{2\phi}{\pi} - 1 \right)$$

In Fig. 4D, $V_{CC}$ represents the positive power supply to the Gilbert Cell, $-V_{EE}$ represents the negative power supply to the Gilbert Cell. In Fig. 4C, $A_1$ and $A_2$ represent the areas used to determine the integral function for calculating the $V_{average}$.

The average voltage ($V_{average}$) for a pulse waveform can be determined by the duty cycle (d) of the waveform by using the following equation, where $V_{peak}$ is the peak voltage: $V_{average} = d*V_{peak}$. Relating the two expressions, the relation between the phase and the duty cycle is:

$$\mathrm{d} * V_{peak} = I_{EE} R_C \left( \frac{2\phi}{\pi} - 1 \right)$$

In accordance with another aspect, a method of determining a shaft angle of a rotor, e.g. rotor shaft 103, includes applying an excitation input to stator windings, e.g. stator windings 106a and 106b. The method includes receiving a rotation signal output from a rotor winding, e.g. rotor winding 104, with at least one phase detector, e.g. phase detector 114a and 114b. The method includes generating a phase difference signal based on the rotation signal output with the phase detector. The method includes determining a shaft angle of the rotor with a processing unit, e.g. a micro-controller 120 or FPGA 220, based on the phase difference signal.

The method includes converting the phase difference signal of each phase detector into a respective pulse output with a respective differentiator, e.g. a differentiator 116a and 116b. The excitation input is a SIN wave. Applying the excitation input includes applying the SIN wave to the first stator winding. The excitation input is a COS wave. Applying the excitation input includes applying the COS wave to the second stator winding. The method includes providing the excitation input to each phase detector as a reference signal, wherein providing the excitation input includes scaling an amplitude of each excitation input with a respective scaling network, e.g. a scaling network 118a or 118b.

As will be appreciated by those skilled in the art, aspects of the present disclosure may be embodied as a system, method or computer program product. Accordingly, aspects of this disclosure may take the form of an entirely hardware embodiment, an entirely software embodiment (including firmware, resident software, microcode, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

The articles "a", "an", and "the" as used herein and in the appended claims are used herein to refer to one or to more than one (i.e., to at least one) of the grammatical object of the article unless the context clearly indicates otherwise. By way of example, "an element" means one element or more than one element.

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "comprising" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e., "one or the other but not both") when preceded by terms of exclusivity, such as "either," "one of," "only one of," or "exactly one of."

Any suitable combination(s) of any disclosed embodiments and/or any suitable portion(s) thereof are contemplated herein as appreciated by those having ordinary skill in the art in view of this disclosure.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the scope of the invention as defined by the claims.

**Claims**

1. A resolver interface system for a motor drive system comprising:

   two phase detectors (114a, 114b) each configured to be operatively connected to a rotation signal output of a resolver and configured to receive a rotation signal therefrom and generate a respective phase difference signal; and
   two differentiators (116a, 116b) each operatively connected to an output of a respective one of the two phase detectors and configured to convert the respective phase difference signal of the phase detector into a respective pulse output; and **characterized by** further comprising
   a processing system (120) operatively connected to the differentiators and configured to read the pulse outputs and determine a shaft angle of a rotor, based on pulse widths or duty cycles of the pulse outputs, wherein the processing system includes two timer units (124a, 124b) each operatively connected to a respective one of the two differentiators and configured to receive the respective pulse output therefrom;
   a SIN wave generator (122a) operatively connected to one of the phase detectors (114a) and configured to provide a SIN reference signal thereto;
   a first scaling network (118a) positioned between the SIN wave generator and the phase detector (114a);

a COS wave generator (122b) operatively connected to another of the phase detectors (114b) and configured to provide a COS reference signal thereto; and

a second scaling network (118b) positioned between the COS wave generator and the phase detector (114b).

2. The resolver interface system as recited in claim 1, wherein the processing system is at least one of a micro-controller or a field-programmable gate array.

3. The resolver interface system as recited in claim 1 or 2, further comprising the resolver (102) having a first excitation input (108), a second excitation input (110) and the rotation signal output (112).

4. The resolver interface system as recited in claim 3, further comprising a rotor winding (104) operatively connected to the rotation signal output and configured to output the rotation signal.

5. The resolver interface system as recited in claim 3 or 4, further comprising at least one of:

a first stator winding (106a) operatively connected to the first excitation input and configured to receive a first excitation signal; or
a second stator winding (106b) operatively connected to the second excitation input and configured to receive a second excitation signal.

6. A method of determining a shaft angle of a rotor, the method comprising:

applying an excitation input to at least one of a first stator winding (106a) or a second stator winding (106b);
receiving a rotation signal that is output from a rotor winding (104) with two phase detectors (114a, 114b);
generating with each phase detector a respective phase difference signal based on the rotation signal; and
determining a shaft angle of the rotor with a processing system (120) based on the phase difference signals; the method **characterized by** further comprising:

converting the phase difference signals into pulse outputs with a respective one of two differentiators associated with the phase detectors;
receiving the pulse outputs from the differentiators with a respective one of two timer units of the processing system (120); and
providing a SIN wave to one of the phase detectors via a first scaling network (118a) as a SIN reference signal and a COS wave to another of the phase detectors via a second scaling network (118b) as a COS reference signal

wherein the excitation input comprises the SIN wave, wherein applying the excitation input includes applying the SIN wave to the first stator winding; and
wherein the excitation input further comprises the COS wave, wherein applying the excitation input includes applying the COS wave to the second stator winding.

**Patentansprüche**

1. Resolver-Schnittstellensystem für ein Motorantriebssystem, umfassend:

zwei Phasendetektoren (114a, 114b), die jeweils dazu konfiguriert sind, betriebsmäßig mit einem Rotationssignalausgang eines Resolvers verbunden zu sein, und dazu konfiguriert sind, ein Rotationssignal von diesem zu empfangen und ein jeweiliges Phasendifferenzsignal zu generieren; und
zwei Differenzierer (116a, 116b), die jeweils betriebsmäßig mit einem Ausgang eines jeweiligen einen von den zwei Phasendetektoren verbunden sind und dazu konfiguriert sind, das jeweilige Phasendifferenzsignal des Phasendetektors in einen jeweiligen Impulsausgang umzuwandeln; und **dadurch gekennzeichnet, dass** es ferner Folgendes umfasst
ein Verarbeitungssystem (120), das betriebsmäßig mit den Differenzierern verbunden ist und dazu konfiguriert ist, die Impulsausgänge zu lesen und einen Wellenwinkel eines Rotors basierend auf Impulsbreiten oder Tastverhältnissen der Impulsausgänge zu bestimmen, wobei das Verarbeitungssystem zwei Zeitgebereinheiten (124a, 124b) beinhaltet, die jeweils betriebsmäßig mit einem jeweiligen einen von den zwei Differenzierern verbunden sind und dazu konfiguriert sind, den jeweiligen Impulsausgang davon zu empfangen;
einen SIN-Wellengenerator (122a), der betriebsmäßig mit einem der Phasendetektoren (114a) verbunden und dazu konfiguriert ist, diesem ein SIN-Referenzsignal bereitzustellen;
ein erstes Skalierungsnetzwerk (118a), das zwischen dem SIN-Wellengenerator und dem Phasendetektor (114a) positioniert ist;
einen COS-Wellengenerator (122b), der betriebsmäßig mit einem anderen der Phasendetektoren (114b) verbunden und dazu konfiguriert ist, diesem ein COS-Referenzsignal bereitzustellen; und
ein zweites Skalierungsnetzwerk (118b), das zwischen dem COS-Wellengenerator und dem Phasendetektor (114b) positioniert ist.

**2.** Resolver-Schnittstellensystem nach Anspruch 1, wobei das Verarbeitungssystem mindestens eine von einer Mikrosteuerung oder einer feldprogrammierbaren Gatteranordnung ist.

**3.** Resolver-Schnittstellensystem nach Anspruch 1 oder 2, ferner umfassend den Resolver (102), der einen ersten Anregungseingang (108), einen zweiten Anregungseingang (110) und den Rotationssignalausgang (112) aufweist.

**4.** Resolver-Schnittstellensystem nach Anspruch 3, ferner umfassend eine Rotorwicklung (104), die betriebsmäßig mit dem Rotationssignalausgang verbunden und dazu konfiguriert ist, das Rotationssignal auszugeben.

**5.** Resolver-Schnittstellensystem nach Anspruch 3 oder 4, ferner umfassend mindestens eine von:

einer ersten Statorwicklung (106a), die betriebsmäßig mit dem ersten Anregungseingang verbunden und dazu konfiguriert ist, ein erstes Anregungssignal zu empfangen; oder
einer zweiten Statorwicklung (106b), die betriebsmäßig mit dem zweiten Anregungseingang verbunden und dazu konfiguriert ist, ein zweites Anregungssignal zu empfangen.

**6.** Verfahren zum Bestimmen eines Wellenwinkels eines Rotors, wobei das Verfahren Folgendes umfasst:

Anlegen eines Anregungseingangs an mindestens eine von einer ersten Statorwicklung (106a) oder einer zweiten Statorwicklung (106b);
Empfangen eines Rotationssignals, das von einer Rotorwicklung (104) ausgegeben wird, mit zwei Phasendetektoren (114a, 114b);
Generieren mit jedem Phasendetektor eines jeweiligen Phasendifferenzsignals basierend auf dem Rotationssignal; und
Bestimmen eines Wellenwinkels des Rotors mit einem Verarbeitungssystem (120) basierend auf den Phasendifferenzsignalen; wobei das Verfahren **dadurch gekennzeichnet ist, dass** es ferner Folgendes umfasst:

Umwandeln der Phasendifferenzsignale in Impulsausgänge mit einem jeweiligen einen von zwei Differenzierern, die mit den Phasendetektoren verknüpft sind;
Empfangen der Impulsausgänge von den Differenzierern mit einer jeweiligen einen von zwei Zeitgebereinheiten des Verarbeitungssystems (120); und
Bereitstellen einer SIN-Welle an einen der Phasendetektoren über ein erstes Skalierungsnetzwerk (118a) als ein SIN-Referenzsignal und einer COS-Welle an einen anderen der Phasendetektoren über ein zweites Skalierungsnetzwerk (118b) als ein COS-Referenzsignal
wobei der Anregungseingang die SIN-Welle umfasst, wobei das Anlegen des Anregungseingangs Anlegen der SIN-Welle an die erste Statorwicklung beinhaltet; und
wobei der Anregungseingang ferner die COS-Welle umfasst, wobei das Anlegen des Anregungseingangs Anlegen der COS-Welle an die zweite Statorwicklung beinhaltet.

## Revendications

**1.** Système d'interface de résolveur pour un système d'entraînement de moteur comprenant :

deux détecteurs de phase (114a, 114b) chacun configuré pour être connecté de manière opérationnelle à une sortie de signal de rotation d'un résolveur et configuré pour recevoir un signal de rotation de celui-ci et générer un signal de différence de phase respectif ; et
deux différentiateurs (116a, 116b) chacun connecté de manière opérationnelle à une sortie d'un détecteur de phase respectif parmi les deux détecteurs de phase et configuré pour convertir le signal de différence de phase respectif du détecteur de phase en une sortie d'impulsion respective ; et **caractérisé en ce qu'**il comprend également
un système de traitement (120) connecté de manière opérationnelle aux différenciateurs et configuré pour lire les sorties d'impulsions et déterminer un angle d'arbre d'un rotor, sur la base des largeurs d'impulsions ou des cycles de service des sorties d'impulsions, dans lequel le système de traitement comporte deux unités de temporisation (124a, 124b) chacune connectée de manière opérationnelle à l'un respectif des deux différenciateurs et configurée pour recevoir la sortie d'impulsion respective de ceux-ci ;
un générateur d'ondes SIN (122a) connecté de manière opérationnelle à l'un des détecteurs de phase (114a) et configuré pour lui fournir un signal de référence SIN ;
un premier réseau de mise à l'échelle (118a) positionné entre le générateur d'ondes SIN et le détecteur de phase (114a) ;

un générateur d'ondes COS (122b) connecté de manière opérationnelle à un autre des détecteurs de phase (114b) et configuré pour lui fournir un signal de référence COS ; et

un second réseau de mise à l'échelle (118b) positionné entre le générateur d'ondes COS et le détecteur de phase (114b).

2. Système d'interface de résolveur tel que décrit dans la revendication 1, dans lequel le système de traitement est au moins un micro-dispositif de commande ou un réseau de portes programmables sur site.

3. Système d'interface de résolveur tel que décrit dans la revendication 1 ou 2, comprenant également le résolveur (102) ayant une première entrée d'excitation (108), une seconde entrée d'excitation (110) et la sortie de signal de rotation (112).

4. Système d'interface de résolveur tel que décrit dans la revendication 3, comprenant également un enroulement de rotor (104) connecté de manière opérationnelle à la sortie de signal de rotation et configuré pour délivrer le signal de rotation.

5. Système d'interface de résolution tel que dans la revendication 3 ou 4, comprenant également au moins l'un des éléments suivants :

un premier enroulement de stator (106a) connecté de manière opérationnelle à la première entrée d'excitation et configuré pour recevoir un premier signal d'excitation ; ou
un second enroulement de stator (106b) connecté de manière opérationnelle à la seconde entrée d'excitation et configuré pour recevoir un second signal d'excitation.

6. Procédé de détermination de l'angle d'un arbre de rotor, le procédé comprenant :

l'application d'une entrée d'excitation à au moins l'un d'un premier enroulement de stator (106a) ou d'un second enroulement de stator (106b) ;
la réception d'un signal de rotation qui est émis par un enroulement de rotor (104) avec deux détecteurs de phase (114a, 114b) ;
la génération avec chaque détecteur de phase d'un signal de différence de phase respectif sur la base du signal de rotation ; et
la détermination d'un angle d'inclinaison de l'arbre du rotor à l'aide d'un système de traitement (120) sur la base des signaux de différence de phase ; le procédé **caractérisé en ce qu'**il comprend également :

la conversion des signaux de différence de phase en sorties d'impulsions avec l'un des deux différenciateurs respectifs associés aux détecteurs de phase ;
la réception des sorties d'impulsions des différentiateurs avec l'une des deux unités de temporisation respectives du système de traitement (120) ; et
la fourniture d'une onde SIN à l'un des détecteurs de phase via un premier réseau de mise à l'échelle (118a) comme signal de référence SIN et une onde COS à un autre des détecteurs de phase via un second réseau de mise à l'échelle (118b) comme signal de référence COS
dans lequel l'entrée d'excitation comprend l'onde SIN, dans lequel l'application de l'entrée d'excitation comporte l'application de l'onde SIN au premier enroulement du stator ; et
dans lequel l'entrée d'excitation comprend également l'onde COS, dans lequel l'application de l'entrée d'excitation comporte l'application de l'onde COS au second enroulement de stator.

102

U₂ 106b

U₁ 106a

ε

104

U₀

103

**Fig. 1**

**Fig. 2**

**Fig. 3**

$V_{in1}$ Input Voltage

$\phi$

$\pi$  $2\pi$  $3\pi$  $4\pi$  $\omega_0 t$

**Fig. 4A**

$V_{in2}$ Input Voltage

$\phi$

$\pi$  $2\pi$  $3\pi$  $4\pi$  $5\pi$  $\omega_0 t$

**Fig. 4B**

Output Voltage

$V_0$

$\phi$

$+I_{EE}R_C$

$A_2$

$A_1$

$\pi$  $2\pi$  $3\pi$  $4\pi$  $5\pi$  $\omega_0 t$

$-I_{EE}R_C$

**Fig. 4C**

13

**Fig. 4D**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4481468 A